(19) Europäisches Patentamt / European Patent Office / Office européen des brevets

(11) **EP 3 616 915 A1**

(12) **EUROPEAN PATENT APPLICATION**

(43) Date of publication:
**04.03.2020 Bulletin 2020/10**

(21) Application number: **18191399.7**

(22) Date of filing: **29.08.2018**

(51) Int Cl.:
**B33Y 70/00** (2020.01)     **B29C 64/106** (2017.01)
**B33Y 10/00** (2015.01)     **B33Y 80/00** (2015.01)
**B28B 1/00** (2006.01)     **C08K 3/38** (2006.01)
**D01F 1/10** (2006.01)     **B29C 70/62** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **3M Innovative Properties Company Saint Paul, MN 55133-3427 (US)**

(72) Inventors:
• **Schädel, Robert**
  **87435 Kempten (DE)**
• **Uibel, Krishna**
  **87448 Waltenhofen (DE)**
• **Wildhack, Stefanie**
  **87437 Kempten (DE)**

(74) Representative: **Mössner, Brigitte**
  **3M Deutschland GmbH**
  **Office of Intellectual Property Counsel**
  **(PC 072P)**
  **Carl-Schurz-Strasse 1**
  **41453 Neuss (DE)**

(54) **3D PRINTED COMPONENT PART COMPRISING A COMPOSITE MATERIAL OF A THERMOPLASTICALLY WORKABLE MATERIAL AND BORON NITRIDE, METHOD FOR MAKING A 3D PRINTED COMPONENT PART AND USE OF A 3D PRINTED COMPONENT PART**

(57)     The present disclosure relates to a filamentary structure manufactured during 3D printing by fused filament fabrication, the filamentary structure comprising a continuous strand comprising a thermoplastically workable material and filler particles, wherein the filler particles comprise hexagonal boron nitride particles comprising hexagonal boron nitride platelets.

The present disclosure further relates to a 3D printable filament for manufacturing said filamentary structure, to a 3D printed component part formed from said filamentary structure, to a 3D printing method for making said 3D printed component part, and to the use of said component part.

FIG. 3D

EP 3 616 915 A1

**Description**

Technical Field

The present disclosure relates to a 3D printed component part comprising a composite material of a thermoplastically workable material and boron nitride.

Background

Thermally conductive polymer compounds are used for thermal management solutions. For electronic devices, like in mobile devices, for LED technology or for electric vehicles, there is a growing demand for thermally conductive and electrically insulating polymer materials. To improve performance of these materials, thermal conductivity needs to be increased. To this end, thermally conductive fillers are used such as alumina and boron nitride. Hexagonal boron nitride is an electrically insulating and highly heat-conductive filler having a platelet-shaped particle morphology and highly anisotropic thermal conductivity properties. Anisotropic thermal conductivity properties are desired for many applications. For certain applications, such as applications where thermal transfer takes place at relatively large surface areas such as in batteries for electric vehicles, a high through-plane thermal conductivity is required. For other applications, such as for very thin thermal interface materials, or for LED applications where heat needs to be removed from small spots also referred to as "hot spots", a high in-plane thermal conductivity is required. In this case the heat is spread by the high in-plane thermal conductivity into the foil.

During processing of polymer-boron nitride compounds, for example by injection molding, the platelet-shaped particles are oriented parallelly to the wall of the injection-molded component part in the regions close to the wall, whereas they are oriented perpendicularly or randomly in the core region of the component part. The resulting thermal conductivity is a mean value of the regions near the wall and the core region. The degree of orientation of boron nitride platelets in injection-molded parts is strongly dependent on the dimensions, particularly thickness, of the injection-molded part and can be influenced by injection molding parameters only to a minor extent. By injection molding parameters, the ratio between in-plane and through-plane thermal conductivity can be influenced only within narrow borders.

Component parts made from polymer materials can be manufactured by 3D printing. One method of 3D printing is the so-called fused filament fabrication, often also referred to as fused deposition modeling. For fused filament fabrication of polymer materials, a solid filament is used which is melted during 3D printing.

In WO 2016/198425 A1, a thermally conductive hotmelt adhesive composition is used as a filament for 3D printing, the composition comprising at least one thermally conductive filler which contains a mixture of flake particles and first spherical particles in a ratio of 10:1, the flake particles having an aspect ratio of 1.25 to 7. The thermally conductive filler comprises second spherical particles with an average particle size from 35 - 55 $\mu$m and third spherical particles with an average particle size of 2 - 15 $\mu$m in a ratio of 10:1. The thermally conductive filler is selected from, among others, aluminium oxide and boron nitride. In this composition with flake particles and second spherical particles with an average particle size from 35 - 55 $\mu$m, the flake particles are oriented substantially isotropically, resulting in isotropic thermal conductive properties.

In WO2016/134984 A1, a thermally conductive composite material comprising an ultrahigh molecular weight (UHMW) polymer and a filler material such as graphite or boron nitride in an amount of greater than about 60 wt.% is disclosed and the use of such a composite material in fused deposition modeling and 3D printing for making articles.

There is still a need for polymer-boron nitride component parts having a high in-plane thermal conductivity, and being economically producible. Furthermore, there is still a need for polymer-boron nitride component parts having a high through-plane thermal conductivity, and being economically producible.

As used herein, "a", "an", "the", "at least one" and "one or more" are used interchangeably. The term "comprise" shall include also the terms "consist essentially of" and "consists of".

Summary

In a first aspect, the present disclosure relates to a filamentary structure manufactured during 3D printing by fused filament fabrication, the filamentary structure comprising a continuous strand comprising a thermoplastic workable material and filler particles, wherein the filler particles comprise hexagonal boron nitride particles comprising hexagonal boron nitride platelets, and wherein the ratio of the width of the continuous strand to the height of the continuous strand is either more than 2 or less than 1.

In another aspect, the present disclosure also relates to a 3D printable filament for manufacturing the filamentary structure disclosed herein during 3D printing, wherein the filament comprises a thermoplastically workable material and filler particles, wherein the filler particles comprise hexagonal boron nitride particles comprising hexagonal boron nitride platelets.

In yet a further aspect, the present disclosure relates to a 3D printed component part comprising at least one portion formed from the filamentary structure disclosed herein.

In yet a further aspect, the present disclosure relates to a 3D printing method for making the 3D printed component part disclosed herein, the method comprising

providing a 3D printable filament, the 3D printable filament comprising a thermoplastically workable material and filler particles, wherein the filler particles comprise hexagonal boron nitride particles comprising hexagonal boron nitride platelets,

melting the 3D printable filament,

extruding the molten filament from a nozzle to form a continuous strand and depositing the continuous strand on a substrate in a predetermined pattern layer by layer to form a filamentary structure, and

cooling the filamentary structure to form a 3D printed component part comprising the thermoplastically workable material and filler particles dispersed therein, wherein the filler particles comprise hexagonal boron nitride particles comprising hexagonal boron nitride platelets, the hexagonal boron nitride platelets having a predetermined orientation in the cooled thermoplastically workable material.

In yet a further aspect, the present disclosure relates to the use of the component part disclosed herein as thermal conduction means to control the temperature of electrical and electronic components or assemblies or batteries.

Surprisingly, by the method disclosed herein 3D printed component parts can be obtained having a high degree of orientation of the boron nitride platelets, the boron nitride platelets being oriented to a high degree either parallelly to the substrate on which the 3D component part is printed, or being oriented to a high degree perpendicularly to the substrate on which the 3D component part is printed. 3D printed component parts with a predetermined direction of orientation, either parallelly or perpendicularly to the substrate, and with a predetermined level of orientation, can be obtained. A core region as for injection-molded parts can be avoided, and 3D printed component parts which are intended to have a high in-plane thermal conductivity may have a higher in-plane thermal conductivity compared to injection-molded parts, particularly compared to the core region of the injection molded part. For 3D printed component part which are intended to have a high through-plane thermal conductivity, boron nitride platelets can be oriented perpendicularly to the substrate and therefore higher through-plane thermal conductivities can be obtained compared to injection molded parts for which thermal conductivity is a mixed value of the core and shell regions. For conventional shaping methods of thin component parts such as injection molding or extrusion of thin sheets, the in-plane thermal conductivity is higher than the through-plane thermal conductivity. For 3D component parts which are intended to have a high through-plane thermal conductivity, the through-plane thermal conductivity may be higher than the in-plane thermal conductivity.

Surprisingly, 3D printed component parts with highly oriented boron nitride platelets can be obtained by the method disclosed herein, even if this is not achievable with other 3D printing methods such as stereolithography and powder bed printing.

The 3D printed component part disclosed herein comprises highly oriented boron nitride platelets and consequently highly anisotropic properties, particularly highly anisotropic thermal conductivity properties. By the present disclosure, 3D printed component parts can be obtained having a predetermined high in-plane or high through-plane thermal conductivity, and with a predetermined level of thermal conductivity, either in-plane or through-plane, and with a predetermined ratio of in-plane to through-plane thermal conductivity.

In some embodiments, the 3D printed component part disclosed herein comprises boron nitride platelets oriented parallelly to the substrate and having a high in-plane thermal conductivity.

In some embodiments, the 3D printed component part disclosed herein comprises boron nitride platelets oriented perpendicularly to the substrate and having a high through-plane thermal conductivity.

The direction of heat flow in the 3D printed component part is predetermined during printing by the choice of infill patterns, printing parameters and nozzle designs over the complete component part or selected portions of the component part. Thermal path ways in the 3D printed component part can be built up three-dimensionally by connected arrangement of portions having a high in-plane conductivity and portions having a high through-plane conductivity.

By the method disclosed herein, 3D printing of a thermally conductive component part directly into an electronic device from which heat has to be dissipated is possible, having the advantage that the component part adheres to the electronic device without using clips or glues. For injection molded parts having the same dimensions as the 3D printed component part, a joining technology would be needed.

3D printing of a thermally conductive component part directly into an electronic device has the additional advantage that the component part is in closest connection to the components of the electronic device for transferring the heat. For injection molded parts having the same dimensions as the 3D printed component part, a gap filler material such as a thermally conductive paste would be needed to fill the gap between the electronic device and the injection molded part.

By the method disclosed herein, 3D printing of a thermally conductive component part can be used to join parts and simultaneously transfer the heat between parts. Examples of such parts are central processing unit (CPU) and copper heat pipe, or CPU and heat spreading plate made of copper or strongly oriented graphite sheets.

By the method for making the 3D printed component part disclosed herein, a flexible method is provided which is able to produce composite component parts of a thermoplastically workable material filled with boron nitride having either a high in-plane thermal conductivity or a high through-plane thermal conductivity, as the application demands and depending on the selected printing parameters. The method for making the 3D printed component part disclosed herein is cost-effective.

Brief Description of the Drawings

The present disclosure is explained in more detail on the basis of the drawings, in which

Figures 1 A- 1 D, 2 A - 2 D, 3 A - 3 D, 4 A - 4D, 5 A - 5 D, 6 A - 6 D, 7 A -7 D, 8 A - 8 D and 9 A - 9 D schematically show various nozzle arrangements that can be used for extruding a continuous strand during 3D printing of the filamentary structure disclosed herein;

Figure 10 A - 10 E show examples of predetermined patterns that can be used for depositing of a continuous strand during 3D printing of the filamentary structure disclosed herein; and

Figure 11 shows the arrangement of a 3D printer operating according to the principle of fused filament fabrication.

Detailed Description

The filamentary structure disclosed herein is manufactured during 3D printing by fused filament fabrication. Fused filament fabrication is a method of additive manufacturing or 3D printing for which a solid filament is used which is melted and extruded through a nozzle and deposited on a substrate, thereby producing a filamentary structure comprising a continuous strand of deposited material. The continuous strand comprises a thermoplastically workable material and filler particles.

As used herein, "a continuous strand" means that either one continuous strand is deposited, or a plurality of continuous strands is deposited.

The ratio of the width of the continuous strand to the height of the continuous strand is either more than 2 or less than 1.

The filler particles comprise hexagonal boron nitride (hBN) particles. The hexagonal boron nitride particles comprise hexagonal boron nitride platelets. As used herein, "platelets" means platelet-shaped particles.

The boron nitride platelets typically have a mean aspect ratio of more than 7. The aspect ratio is the ratio of the diameter to the thickness of the boron nitride platelets. More specifically, the mean aspect ratio of the boron nitride platelets may be at least 10, or at least 15, or at least 20. The mean aspect ratio of the boron nitride platelets may also be up to 40, or up to 100. The mean aspect ratio of the boron nitride platelets may be from 7 to 20, or from 20 to 40, or from 7 to 40, or from 10 to 40, or from 50 to 100. Typically, the mean aspect ratio of the boron nitride platelets is at most 500. The mean aspect ratio can be measured by scanning electron microscopy (SEM), by determining the aspect ratio of 20 particles, and calculating the mean value of the 20 individual values determined for the aspect ratio. The aspect ratio of an individual boron nitride platelet is determined by measuring the diameter and the thickness of the boron nitride platelet and calculating the ratio of the diameter to the thickness. Required magnification of the SEM images used to measure diameter and thickness of boron nitride platelets depends on the size of the platelets. Magnification should be at least 1000x, preferably at least 2000x. Where appropriate, i.e. for smaller platelets with a mean particle size ($d_{50}$) of 5 to 10 $\mu$m, a magnification of 5000x should be used.

Typically, the mean particle size ($d_{50}$) of the boron nitride platelets and of the boron nitride particles is at least 5 $\mu$m. The mean particle size ($d_{50}$) of the boron nitride platelets and of the boron nitride particles may be at least 7 $\mu$m, or at least 10 $\mu$m, or at least 12 $\mu$m, or at least 15 $\mu$m, or at least 20 $\mu$m, or at least 30 $\mu$m. Typically, the mean particle size ($d_{50}$) of the boron nitride platelets is at most 100 $\mu$m, and the mean particle size ($d_{50}$) of the boron nitride particles is at most 250 $\mu$m. The mean particle size ($d_{50}$) of the boron nitride platelets and of the boron nitride particles may be at most 80 $\mu$m, or at most 60 $\mu$m, or at most 50 $\mu$m, or at most 30 $\mu$m. The mean particle size ($d_{50}$) of the boron nitride platelets and of the boron nitride particles may be from 5 to 100 $\mu$m. More specifically, the mean particle size ($d_{50}$) of the boron nitride platelets and of the boron nitride particles may be from 5 to 50 $\mu$m, or from 5 to 30 $\mu$m, or from 10 to 30 $\mu$m, or from 15 to 35 $\mu$m, or from 15 to 50 $\mu$m or from 30 to 50 $\mu$m. The mean particle size ($d_{50}$) can be measured by laser diffraction.

A portion of the hexagonal boron nitride platelets may be agglomerated to form boron nitride agglomerates. The mean particle size ($d_{50}$) of the boron nitride agglomerates may be at most 250 $\mu$m and more specifically at most

200 $\mu$m, at most 150 $\mu$m or at most 100 $\mu$m. The mean particle size ($d_{50}$) of the boron nitride agglomerates may be at least 50 $\mu$m or at least 70 $\mu$m. The mean particle size ($d_{50}$) can be measured by laser diffraction. Typically, less than 50% of the hexagonal boron nitride platelets are agglomerated, and at least 50% of the hexagonal boron nitride platelets are used as non-agglomerated particles, that means as primary particles. Also mixtures of agglomerates and non-agglomerated primary particles may be used. The boron nitride agglomerates may be spherical, irregularly shaped or flake-shaped, the flake-shaped agglomerates having an aspect ratio of from 1 to 20.

The hexagonal boron nitride particles may also comprise particles which have a low aspect ratio. A "low aspect ratio" means that the hexagonal boron nitride particles have an aspect ratio of at most 7. Typically, the proportion of hexagonal boron nitride particles with a low aspect ratio is at most 50% and more specifically at most 35% or at most 20%, based on the total amount of hexagonal boron nitride particles. The hexagonal boron nitride particles with a low aspect ratio may be agglomerated to form boron nitride agglomerates. The mean particle size ($d_{50}$) of the boron nitride agglomerates formed from boron nitride particles with a low aspect ratio may be at most 250 $\mu$m and more specifically at most 200 $\mu$m, at most 150 $\mu$m or at most 100 $\mu$m. The mean particle size ($d_{50}$) of the boron nitride agglomerates formed from boron nitride particles with a low aspect ratio may be at least 20 $\mu$m or at least 50 $\mu$m. The mean particle size ($d_{50}$) can be measured by laser diffraction. The boron nitride agglomerates formed from boron nitride particles with a low aspect ratio may be spherical, irregularly shaped or flake-shaped, the flake-shaped agglomerates having an aspect ratio of from 1 to 20. The hexagonal boron nitride particles with a low aspect ratio may also be used as non-agglomerated particles, that means as primary particles. Also mixtures of agglomerates and non-agglomerated primary particles with a low aspect ratio may be used. The hexagonal boron nitride particles may also comprise boron nitride agglomerates that comprise boron nitride platelets and boron nitride particles with a low aspect ratio.

The hexagonal boron nitride particles and the hexagonal boron nitride platelets typically have a content of water-soluble boron compounds such as boron oxide of at most 0.2 percent by weight, based on the total amount of hexagonal boron nitride particles or hexagonal boron nitride platelets, respectively.

The filler particles may further comprise secondary fillers with a high aspect ratio, different from hexagonal boron nitride particles. The secondary fillers may be thermally conductive. The use of high aspect ratio secondary fillers enhances the predetermined orientation of boron nitride platelets in the continuous strand and enhances the directed thermal conductivity by the intrinsic thermal conductivity of the secondary filler. The aspect ratio of the high aspect ratio secondary fillers may be at least 5, or at least 10. The aspect ratio of the high aspect ratio secondary fillers may be up to 50, or up to 100. The secondary fillers having a high aspect ratio may be platelet shaped particles, or needle or fiber shaped particles. Examples for platelet shaped particles are platelet shaped ceramic platelets such as alpha alumina platelets, and platelet shaped mineral particles such as layered silicates and talcum powder comprising talcum platelets. Examples for needle or fiber shaped particles are chopped fibers made of alumina or silica, and needle shaped mineral fillers such as wollastonite. The mean particle size ($d_{50}$) of the platelet shaped, high aspect ratio secondary fillers may be from 5 to 100 $\mu$m. The diameter of the needle or fiber shaped high aspect ratio secondary fillers may be from 1 to 25 $\mu$m.

The filler particles may further comprise secondary fillers having a low aspect ratio of less than 5, different from hexagonal boron nitride. The mean particle size ($d_{50}$) of the low aspect ratio secondary fillers is less than 2 $\mu$m.

In some embodiments of the present disclosure, the filler particles consist of hexagonal boron nitride particles comprising hexagonal boron nitride platelets, of secondary fillers with a high aspect ratio of at least 5 or at least 10, and of secondary fillers with a low aspect ratio of less than 5 and a mean particle size ($d_{50}$) of less than 2 $\mu$m. In some embodiments of the present disclosure, the filler particles consist of hexagonal boron nitride particles comprising hexagonal boron nitride platelets, and of secondary fillers with a high aspect ratio of at least 5 or at least 10, and the filler particles do not comprise low aspect ratio secondary fillers. In some embodiments, the average value of the aspect ratio of the filler particles used is at least 10. In some embodiments, the filler particles consist of hexagonal boron nitride particles comprising hexagonal boron nitride platelets.

The thermoplastically workable material is selected from the group consisting of thermoplastic materials, thermoplastically workable duroplastic materials, and mixtures thereof. In particular the thermoplastic materials polyamide (PA), polybutylene terephthalate (PBT), polyethylene terephthalate (PET), polyethylene terephthalate glycol-modified (PETG), polyphenylene sulfide (PPS), polycarbonate (PC), polyethylene (PE), polypropylene (PP), thermoplastic elastomers (TPE), thermoplastic polyurethane elastomers (TPU), polyether ether ketones (PEEK), liquid crystal polymers (LCP), polyoxymethylene (POM), polylactic acid (PLA), acrylonitrile butadiene styrene copolymer (ABS), high impact polystyrene (HIPS), acrylic ester-styrene-acrylonitrile copolymer (ASA), polymethyl methacrylate (PMMA), and elastomers may be used. Examples for elastomers that may be used are liquid silicon rubber (LSR), ethylene propylene diene rubber (EPDM), nitrile rubber (NBR), hydrated nitrile rubber (HNBR), fluorocarbon rubber (FKM), acrylate rubber (ADM), and ethylene acrylate rubber (AEM).

Particularly advantageously, thermoplastic elastomers (TPE) may be used. Examples for thermoplastic elastomers are thermoplastic copolyamides (TPA), thermoplastic polyester elastomers (TPC), olefin based thermoplastic elastomers (TPO), styrene block copolymers (TPS) and urethane based thermoplastic elastomers (TPU).

Examples for thermoplastically workable duroplastic materials that can be used are phenolformaldehyde materials, epoxide materials, melamine formaldehyde materials and urea formaldehyde materials.

The continuous strand may comprise 5 to 60 percent by volume of hexagonal boron nitride particles, based on the total amount of the continuous strand. More specifically, the continuous strand may comprise 10 to 55, or 5 to 25, or 10 to 30, or 40 to 60 percent by volume of hexagonal boron nitride particles, based on the total amount of the continuous strand. The continuous strand may comprise 5 to 80 percent by volume of filler particles, based on the total amount of the continuous strand. The continuous strand may comprise up to 72 percent by volume, or up to 64 percent by volume, of secondary fillers, based on the total amount of the continuous strand. The secondary fillers may be high aspect ratio secondary fillers or low aspect ratio secondary fillers or both.

The continuous strand may comprise 20 to 95 percent by volume of thermoplastically workable material, based on the total amount of the continuous strand. If the continuous strand does not comprise secondary fillers, the continuous strand may comprise 40 to 95 percent by volume of thermoplastically workable material, based on the total amount of the continuous strand.

In some embodiments of the filamentary structure disclosed herein, the ratio of the width of the continuous strand to the height of the continuous strand is more than 2. More specifically, the ratio of the width of the continuous strand to the height of the continuous strand may be at least 3, or at least 4, or at least 5, or at least 10, or at least 20. The ratio of the width of the continuous strand to the height of the continuous strand may be at most 100. As used herein, the ratio of the width of the continuous strand to the height of the continuous strand may also be referred to as the aspect ratio of the continuous strand. The aspect ratio of the continuous strand may be from more than 2 to 50, or from 3 to 50, or from 5 to 50, or from 10 to 50, or from 5 to 40, or from 10 to 40, or from 15 to 50, or from 5 to 100.

If the ratio of the width of the continuous strand to the height of the continuous strand is more than 2, the height of the continuous strand may be 500 $\mu$m or less. More specifically, the height of the continuous strand may be at most 200 $\mu$m, or at most 100 $\mu$m. The height of the continuous strand may also be at most 50 $\mu$m, or even at most 20 $\mu$m. The height of the continuous strand may be selected depending on the specific application.

If the ratio of the width of the continuous strand to the height of the continuous strand is more than 2, high in-plane thermal conductivities can be obtained.

In some embodiments of the filamentary structure disclosed herein, the ratio of the width of the continuous strand to the height of the continuous strand is less than 1. More specifically, the ratio of the width of the continuous strand to the height of the continuous strand may be at most 0.9, or at most 0.7, or at most 0.5. The ratio of the width of the continuous strand to the height of the continuous strand may also be at most 0.3, or at most 0.1. The aspect ratio of the continuous strand may be less than 1 and at least 0.05, or at least 0.01. The aspect ratio of the continuous strand may be from 0.1 to less than 1, or from 0.1 to 0.9, or from 0.1 to 0.7, or from 0.1 to 0.5, or from 0.5 to less than 1, or from 0.5 to 0.9, or from 0.5 to 0.7, or from 0.01 to 0.5.

If the ratio of the width of the continuous strand to the height of the continuous strand is less than 1, the height of the continuous strand may be up to 2 mm. More specifically, the height of the continuous strand may be up to 1 mm, or up to 500 $\mu$m, or up to 200 $\mu$m. The height of the continuous strand may be selected depending on the specific application.

If the ratio of the width of the continuous strand to the height of the continuous strand is less than 1, high through-plane thermal conductivities can be obtained.

In some embodiments of the filamentary structure disclosed herein, the continuous strand comprises portions being oriented parallelly to one another. Preferably, a large proportion of the continuous strand comprises portions being oriented parallelly to one another. For example, at least 10% of the continuous strand may comprise portions being oriented parallel to one another, or at least 25%, or at least 50%, or at least 70%, or at least 90% of the continuous strand may comprise portions being oriented parallelly to one another. It is also possible that 100% of the continuous strand consists of portions being oriented parallelly to one another.

The continuous strand may comprise portions having close contact to one another, or may comprise portions that overlap each other. The overlap may be to an extent of 10 to 50%. The continuous strand may also comprise portions which are crossing each other.

Further disclosed herein is a 3D printable filament for manufacturing the filamentary structure disclosed herein during 3D printing. The filament comprises a thermoplastically workable material and filler particles. The filler particles comprise hexagonal boron nitride particles comprising hexagonal boron nitride platelets. The filament comprising a thermoplastically workable material and filler particles is used as manufacturing material in a 3D printing process for extruding the filamentary structure.

The 3D printable filament may comprise 5 to 60 percent by volume of hexagonal boron nitride particles, based on the total amount of the 3D printable filament. More specifically, the 3D printable filament may comprise 10 to 55, or 5 to 25, or 10 to 30, or 40 to 60 percent by volume of hexagonal boron nitride particles, based on the total amount of the 3D printable filament. The 3D printable filament may comprise 5 to 80 percent by volume of filler particles, based on the total amount of the 3D printable filament. The 3D printable filament may comprise up to 72 percent by volume, or up to 64 percent by volume, of secondary fillers, based on the total amount of the 3D printable filament. The secondary fillers may be high aspect ratio secondary fillers or low aspect ratio secondary fillers or both.

The 3D printable filament may comprise 20 to 95 percent by volume of thermoplastically workable material, based on the total amount of the 3D printable filament. If the 3D printable filament does not comprise secondary fillers, the 3D printable filament may comprise 40 to 95 percent by volume of thermoplastically workable material, based on the total amount of the 3D printable filament.

The hexagonal boron nitride particles comprising hexagonal boron nitride platelets and the thermoplastically workable material that are used for the 3D printable filament have been described above in more detail.

The 3D printable filament can be made by extruding the thermoplastically workable material and the filler particles which comprise hexagonal boron nitride particles comprising hexagonal boron nitride platelets. For extruding, various extruders such as a twin screw extruder, a single screw extruder, or a planetary extruder can be used. By gravimetric dosing, granulates of the basic polymer are fed into the extruder and are melted subsequently. By a side feeder, fillers can be introduced in the polymer melt. Mixing and shear elements disperse the filler in the polymer melt to form a compound. The compound is forced through nozzles, cools down and solidifies in the shape of filaments. To improve the homogeneity of the filament, the extruded filament can be extruded again through an extruder to form a homogenous filament.

Further disclosed herein is a 3D printed component part comprising at least one portion formed from the filamentary structure disclosed herein.

In some embodiments, at least 30% of the 3D printed component part is formed from the filamentary structure disclosed herein. In other embodiments, at least 50% or at least 80% of the 3D printed component part is formed from the filamentary structure disclosed herein. In some embodiments, 100% of the 3D printed part is formed from the filamentary structure disclosed herein. For example, if the 3D printed component part is a thin sheet or pad with a thickness of, for example, up to 1 mm, 100% of the 3D printed component part may be formed from the filamentary structure disclosed herein. Another example of a 3D printed component part of the present disclosure is a heatsink of which only one portion is formed from the filamentary structure disclosed herein and having a high through-plane thermal conductivity, e.g. in the region of contact to a CPU, and a high in-plane thermal conductivity, e.g. in the region of the cooling fins, whereas other portions of the 3D printed component such as the mounting segment may be printed with a different 3D printable filament which may have good mechanical properties and which may comprise glass fibers and no hexagonal boron nitride particles. It is also possible that one portion of the 3D printed component part is formed from the filamentary structure disclosed herein and having a ratio of the width of the continuous strand to the height of the continuous strand of more than 2, and having a high in-plane thermal conductivity, and another portion of the 3D printed component part is formed from the filamentary structure disclosed herein and having a ratio of the width of the continuous strand to the height of the continuous strand of less than 1, and having a high through-plane thermal conductivity. The texture index can be measured separately on the two portions of the 3D printed component.

In some embodiments of the 3D printed component part of the present disclosure, the at least one portion of the component part formed from the filamentary structure disclosed herein has a texture index of at least 8, and the ratio of the width of the continuous strand to the height of the continuous strand in the filamentary structure is more than 2. More specifically, the texture index may be at least 10, or at least 12, or at least 15, or at least 20, or at least 30, or at least 50, or at least 100, and the ratio of the width of the continuous strand to the height of the continuous strand in the filamentary structure is more than 2. The texture index may be from 8 to 400, or from 10 to 400, or from 15 to 400, or from 8 to 300, or from 10 to 300, or from 15 to 300, and the ratio of the width of the continuous strand to the height of the continuous strand in the filamentary structure is more than 2.

If the ratio of the width of the continuous strand to the height of the continuous strand in the filamentary structure is more than 2, a high in-plane thermal conductivity can be obtained. With increasing aspect ratio of the continuous strand, the texture index and the in-plane thermal conductivity increase, and the through-plane thermal conductivity decreases. In-plane thermal conductivity is measured in a direction parallell to the substrate on which the continuous strand is deposited, through-plane thermal conductivity is measured in a direction perpendicular to the substrate on which the continuous strand is deposited.

By the texture index, the degree of orientation of the hexagonal boron nitride platelets can be measured. The texture index can be measured on the 3D component part formed from the filamentary structure disclosed herein.

The texture index is determined by an X-ray method. For this, the ratio of the intensities of the (002) and of the (100) reflection measured on X-ray diffraction diagrams is determined and is divided by the corresponding ratio for an ideal, untextured hBN sample. This ideal ratio can be determined from the JCPDS data and is 7.29. The intensity of the (002) reflection is measured within a 2Θ range from 25.8 to 27.6 degrees and that of the (100) reflection within a 2Θ range from 41.0 to 42.2 degrees. The texture index (TI) can be determined from the formula:

$$TI = \frac{I_{(002), sample} / I_{(100), sample}}{I_{(002), theoretical} / I_{(100), theoretical}} = \frac{I_{(002), sample} / I_{(100), sample}}{7.29}$$

The intensity of the (100) reflection should be at least 1.0. If the intensity of the (100) reflection is below 1.0, the measurement speed in the $2\Theta$ ranges from 25.8 to 27.6 degrees and from 41.0 to 42.2 degrees can be decreased to obtain a sufficient intensity of the (100) reflection.

In some embodiments of the 3D printed component part of the present disclosure, the at least one portion of the component part formed from the filamentary structure disclosed herein has a texture index of less than 1, and the ratio of the width of the continuous strand to the height of the continuous strand in the filamentary structure is less than 1. More specifically, the texture index may be at most 0.9, or at most 0.8, or at most 0.5, or at most 0.2, or at most 0.1, or at most 0.05, or at most 0.01, and the ratio of the width of the continuous strand to the height of the continuous strand in the filamentary structure is less than 1. The texture index may be from 0.1 to less than 1, or from 0.1 to 0.9, or from 0.1 to 0.8, or from 0.1 to 0.5, or from 0.01 to 0.5, or from 0.03 to 0.3, and the ratio of the width of the continuous strand to the height of the continuous strand in the filamentary structure is less than 1.

If the ratio of the width of the continuous strand to the height of the continuous strand in the filamentary structure is less than 1, a high through-plane thermal conductivity can be obtained. With decreasing aspect ratio of the continuous strand, the texture index decreases and the through-plane thermal conductivity increases, and the in-plane thermal conductivity decreases.

In some embodiments of the 3D printed component part of the present disclosure, the at least one portion of the component part formed from the filamentary structure disclosed herein has a relative density of at least 60% of the theoretical density of the filamentary structure. The relative density of the at least one portion of the component part may also be at least 80% or at least 90% of the theoretical density of the filamentary structure, that is of the theoretical density of the matrix material-boron nitride compound without any pores. The density can be determined by using the Archimedes method.

The 3D printed component part disclosed herein may be made by a 3D printing method comprising

providing a 3D printable filament, the 3D printable filament comprising a thermoplastically workable material and filler particles, wherein the filler particles comprise hexagonal boron nitride particles comprising hexagonal boron nitride platelets,
melting the 3D printable filament,
extruding the molten filament from a nozzle to form a continuous strand and depositing the continuous strand on a substrate in a predetermined pattern layer by layer to form a filamentary structure, and
cooling the filamentary structure to form a 3D printed component part comprising the thermoplastically workable material and filler particles dispersed therein, wherein the filler particles comprise hexagonal boron nitride particles comprising hexagonal boron nitride platelets, the hexagonal boron nitride platelets having a predetermined orientation in the cooled thermoplastically workable material.

By this method, the at least one portion of the 3D component part formed from the filamentary structure disclosed herein can be obtained.

The filament used for the method for making the 3D printed component part comprises a thermoplastically workable material and filler particles, wherein the filler particles comprise hexagonal boron nitride particles comprising hexagonal boron nitride platelets. The thermoplastically workable material and the filler particles have been described above in more detail. The filament may further comprise secondary fillers as described above.

The filament is solid and has a defined diameter so that it can be fed into the nozzle. The diameter of the filament may be from 0.5 to 3 mm, for example. For lower contents of boron nitride filler, the filament may be used as a wound coil and continuously fed into the nozzle. For higher contents of boron nitride filler, the filament may be used in discontinuous portions as round rods that are fed into the nozzle.

During 3D printing, the 3D printable filament is melted and a continuous strand is extruded from a nozzle and deposited on a substrate. For melting the 3D printable filament and for extruding the continuous strand and depositing the continuous strand on a substrate, a 3D printer or a robot may be used. The 3D printer is operating according to the principle of fused filament fabrication (FFF). By fused filament fabrication, a solid filament is melted and is deposited on a substrate in the shape of a continuous strand, thereby forming the filamentary structure.

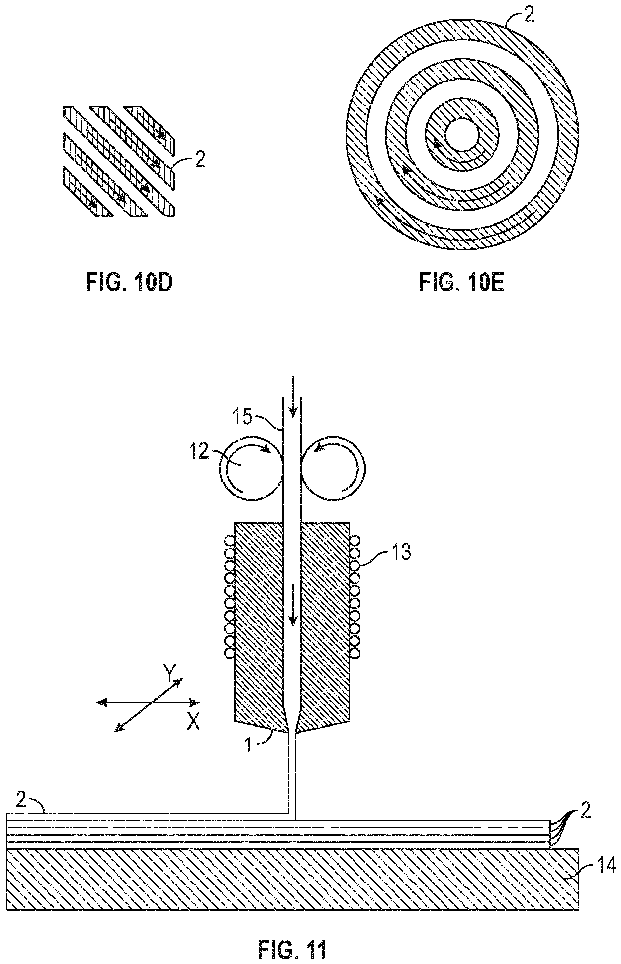

Figure 11 illustrates the arrangement of a 3D printer operating according to the principle of fused filament fabrication (FFF 3D printer). The FFF 3D printer comprises drive wheels 12 shown counter-rotating in relation to each other, a heated liquefier 13, a nozzle 1 and a printing plate 14. The printing plate 14 may be heated. The heated liquefier 13 is designed to maintain a uniform temperature throughout the liquefier. In Figure 11, a 3D printable filament 15 as disclosed herein is shown being transported by the two counter-rotating drive wheels 12 and being guided through the heated liquefier 13 and the nozzle 1. The 3D printable filament 15 is heated and melted as it passes through the heated liquefier 13 and typically will be of a reduced thickness or diameter as it is ejected from the nozzle 1.

The molten filament is extruded from the nozzle 1 to form a continuous strand 2 which is deposited on a substrate. The substrate may be the printing plate 14 or a separate substrate placed on the printing plate 14. The heated liquefier 13 and the nozzle 1 may be moved in a variety of directions indicated by "x" and "y" relative to the printing plate. The direction "y" indicates a direction into the plane of the page and is approximately at right angles to the direction indicated by "x". Directions other than in the "x" and "y" direction are also possible.

As used herein, "melting the 3D printable filament" is to be understood that the thermoplastically workable material contained in the 3D printable filament is heated up to a temperature above the glass transition temperature $T_g$ of the thermoplastically workable material. In the heated liquefier 13, the thermoplastically workable material is heated up to a temperature above the glass transition temperature, $T_g$. On leaving the liquefier, the melt is well above this temperature. Heat from the material leaving the liquefier increases the temperature of the substrate it is deposited on above $T_g$ to enable bonding of deposited portions of the continuous strand.

As the molten filament comprises hexagonal boron nitride platelets and has a high thermal conductivity, the molten filament solidifies rapidly after leaving the heated liquefier 13 and the nozzle 1. To ensure a good bonding of deposited portions of the continuous strand, the printing plate 14 of the FFF 3D printer may be heated.

A continuous strand is extruded from the nozzle, and the continuous strand is deposited on a substrate in a predetermined pattern layer by layer to form the filamentary structure. The continuous strand being deposited layer by layer forms a stack of layers of the continuous strand. In some embodiments, only one single layer is deposited. An application example where only one single layer may be deposited are heat spreaders for LED applications, where heat is spreaded within a layer having a high in-plane thermal conductivity and a texture index of more than 8. Another application example where only one single layer may be deposited is a cooling plate or pad for a battery for automotive electrification, the cooling plate or pad having a high through-plane thermal conductivity to remove heat from the battery cells by transporting it to the cooling plate or pad.

In other embodiments, a plurality of layers of the continuous strand is deposited. As used herein, "a plurality of layers" means that at least two layers or more layers are deposited. The number of layers is not particularly limited, for example, 5, 10, 20, 30, 50, 100 or more layers may be deposited. The continuous strand may be deposited continuously on the substrate without interruptions, or may be deposited in multiple portions, each portion being deposited continuously.

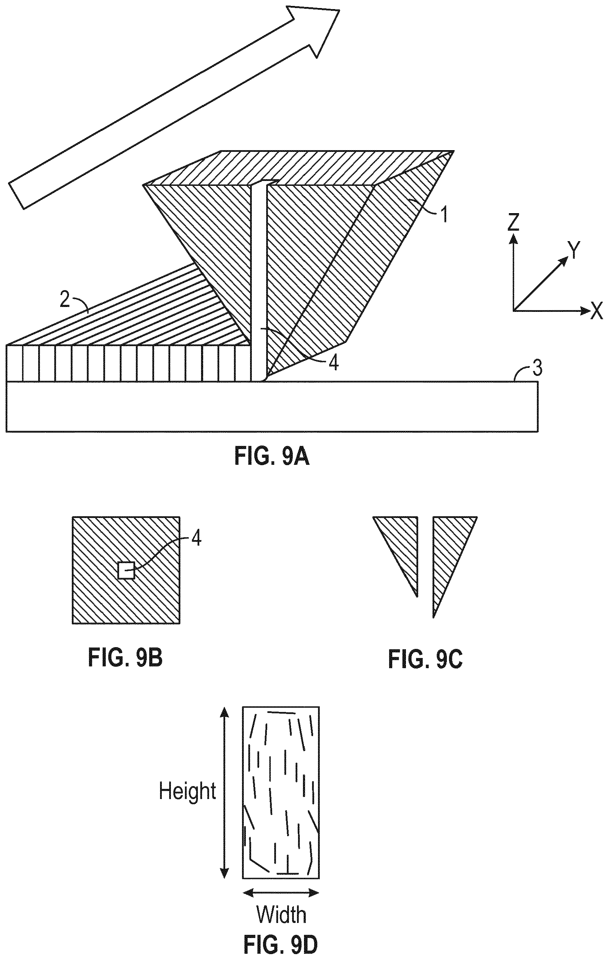

The substrate may be planar. The substrate may also have a 3D contour, for example for electronic applications. The material of the substrate is not specifically limited, it may be of metal, glass, ceramics, graphite, or of a polymer material, for example. The substrate may also be, for example, a CPU or a cooling plate or pad. If the substrate has a 3D contour, the predetermined pattern for 3D printing can be adapted to the 3D contour. In some embodiments, the nozzle can be tilted to adapt the deposition of the continuous strand to an inclined area of the substrate. This is possible for a deposition for high in-plane thermal conductivity, with an aspect ratio of the continuous strand of more than 2, as well as for a deposition for high through-plane thermal conductivity, with an aspect ratio of the continuous strand of less than 1. In some embodiments with a deposition for high through-plane thermal conductivity and with an aspect ratio of the continuous strand of less than 1, the nozzle is rotated at a certain angle, as the deposition of the continuous strand is limited to one side of the nozzle (see Figures 9 A - 9 D). The rotation of the nozzle is not being carried out continuously but only at a certain angle to allow the deposition of the continuous strand in a different direction.

In some applications of the 3D printed component part, it is possible to remove the substrate after the 3D printing process has been completed.

At least one part of the continuous strand may be deposited in portions being oriented parallelly to one another. Specifically, at least 25%, or at least 50%, or at least 90% of the continuous strand may be deposited in portions being oriented parallelly to one another.

The portions being deposited parallelly to one another may be deposited in the same direction of deposition, or may be deposited in alternating directions of deposition. Preferably, the portions being deposited parallelly to one another are deposited in the same direction of deposition.

By 3D printing using a fused filament fabrication method, by methods known in the art typically filamentary structures are printed having a dense shell and an inner structure with voids resulting in a low filling ratio and a low density of the filamentary structure and of the 3D printed component part. The filling ratio is the ratio of volume filled to the total volume of the sample. The filling ratio can also be expressed as a percentage by multiplying the ratio with 100. The lower the filling ratio, the faster the printing process of the filamentary structure. The infill pattern of the inner structure can consist of linear strands crossing each other perpendicularly, or can be hexagonal honeycomb-like structures. The inner structure comprises hollow volumes filled with air, the hollow volumes occupying the largest part of the inner volume of the 3D printed component parts. Typically, the hollow volumes amount to about 80% or more of the 3D printed component parts.

By the 3D printing method disclosed herein, highly oriented boron nitride platelets in the deposited continuous strand, in the filamentary structure formed and in the 3D printed component part are achieved, resulting in highly textured filamentary structures and 3D printed component parts that are obtained. By using printing parameters not being typically used in the art, unusual filling patterns and/or nozzle geometries, a predetermined orientation of boron nitride platelets can be obtained. A composite material of a thermoplastically workable material and boron nitride having either a high in-plane or a high through-plane thermal conductivity can be obtained.

The continuous strand may be deposited in multiple portions. As described above, a plurality of layers of the continuous strand may be deposited. The continuous strand of a first layer deposited on the substrate is sufficiently mechanically stable to support a second layer. The mechanical stability of each layer can be achieved by using high viscosity filament compositions.

The continuous strand is deposited on a substrate in a predetermined pattern layer by layer. In one layer, the continuous strand may comprise periodic patterns of deposited portions, for example portions being oriented parallelly to one another. In one layer, the continuous strand may consist of portions being oriented parallelly to one another. The continuous strand may be deposited in portions having close contact to one another, or overlapping each other. The overlap may be to an extent of up to about 20%.

The deposited portions of the continuous strand and the continuous strand have a width and a height. The height of the continuous strand corresponds to the height of a 3D printed layer. As used herein, the ratio of the width of the continuous strand to the height of the continuous strand is also referred to as aspect ratio of the continuous strand.

In some embodiments, at least two portions of the continuous strand being oriented parallelly to one another are deposited, or at least three portions of the continuous strand being oriented parallelly to one another are deposited, or at least five portions of the continuous strand being oriented parallelly to one another are deposited, the parallel portions of the continuous strand having a total width of at least 0.5 mm or of at least 1 mm, and at least two layers, or at least three layers, or at least five layers being deposited.

The continuous strand may comprise portions being oriented parallelly to one another and being deposited in the same direction of deposition. The continuous strand may comprise portions being oriented parallelly to one another and being deposited in the same and in an opposite direction of deposition, for example in an alternating manner.

The continuous strand may comprise portions being oriented perpendicular to one another, or being inclined to one another with an angle of from 0° to 90°.

The continuous strand is deposited on a substrate in a predetermined pattern layer by layer. If more than one layer is deposited, the continuous strand may comprise periodic patterns of deposited portions from layer to layer. The continuous strand may comprise deposited portions in one layer being oriented parallelly to deposited portions in another layer. A large proportion of the continuous strand may be deposited in portions being oriented parallelly to one another in each single layer, and a large proportion of the continuous strand may be deposited in portions in one layer being oriented parallelly to portions deposited in another layer. By "a large proportion" it is meant that 80% or more, or 90% or more, or even 100% of the continuous strand are deposited in portions being oriented parallelly to one another.

For two consecutive layers, the successive layer may be deposited with respect to the previous layer by rotation with an angle of from 0° to 360°. The rotation may be clockwise or counterclockwise.

For two consecutive layers, the successive layer may be deposited with an offset with respect to the previous layer.

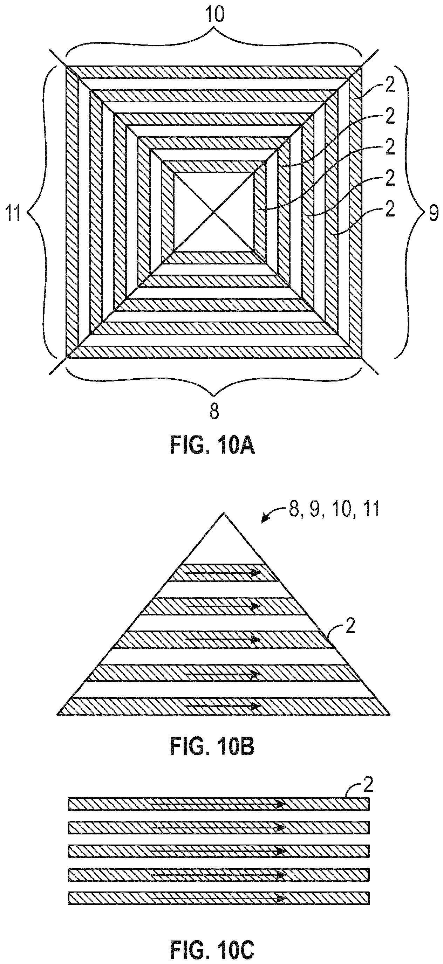

An example for a predetermined pattern for depositing the continuous strand in one layer is schematically shown in Figure 10A. The continuous strand 2 is deposited in one layer in portions being oriented parallelly to one another. The pattern of Figure 10 has four parts 8, 9, 10, 11, and in each of these parts the continuous strand is deposited in portions being oriented parallelly to one another and being deposited in the same direction of deposition. The individual portions of the continuous strand may be in close connection to one another, or may overlap each other. In Figure 10A the individual portions are shown with a certain distance to each other to better show how the individual portions are deposited. Figure 10B shows one of the four parts 8, 9, 10, 11. The arrows in Figure 10 B indicate the direction of deposition. From layer to layer, this pattern may be repeated, the deposited portions of the first layer being oriented parallelly to the deposited portions of the second layer and of all further layers.

Other examples for predetermined pattern for depositing the continuous strand in one layer are schematically shown in Figures 10 C - 10 E. In Figure 10C and 10D, the continuous strand 2 is deposited in one layer in portions being oriented parallelly to one another. All portions of the continuous strand are oriented parallelly to one another, and all portions are deposited in the same direction. In Figure 10E, the continuous strand 2 is deposited in one layer in concentric portions having a circular shape.

Predetermined patterns used for the 3D printing method disclosed herein usually do not comprise a shell structure as in known methods of 3D printing. A shell structure is not required, as dense structures are printed.

In some embodiments of the method and of the filamentary structure disclosed herein, the ratio of the width of the continuous strand to the height of the continuous strand is more than 2 : 1 which means more than 2. The hexagonal boron nitride platelets have a basal plane, and the basal plane of the hexagonal boron nitride platelets is oriented parallelly to the substrate on which the filamentary structure is deposited. The basal plane of the hexagonal boron nitride platelets in each layer is oriented parallelly to the basal plane of the hexagonal boron nitride platelets in each previous layer. The orientation of the boron nitride platelets being parallel to the substrate and to each previous layer can be determined by measuring the texture index of the resulting 3D printed component part, on a sample with one major surface of the sample being arranged in a direction parallel to the substrate, and the one major surface of the sample being oriented parallelly to the surface of the sample holder of the XRD measurement.

As used herein, the orientation of the boron nitride platelets being parallel to the substrate means that the resulting 3D printed component parts have a high texture index of at least 8. More specifically, the texture index may be at least 10, or at least 12, or at least 15, or at least 20, or at least 30, or at least 50, or at least 100. The ratio of the width of the continuous strand to the height of the continuous strand of these embodiments is more than 2 and may be at least 3, or at least 4, or at least 5, or at least 10, or at least 20. The ratio of the width of the continuous strand to the height of the continuous strand may also be referred to as the aspect ratio of the continuous strand. A high aspect ratio of the continuous strand of more than 2 will lead to high values of in-plane thermal conductivity, and the values of in-plane thermal conductivity will increase with increasing aspect ratio of the continuous strand.

The orientation of the hexagonal boron nitride platelets can be seen by optical microscopy on polished cross sections of the 3D printed matrix material-boron nitride composite, after a treatment with $KMnO_4$ for 5 minutes at 60 °C. If no sufficient contrast can be achieved, the treatment has to be repeated. By this method, it is possible to detect if the complete 3D printed component part is textured in the same manner or if only selected sections of the component part are textured in the same manner. It can also be detected if the hexagonal boron nitride platelets are oriented with a high or a low texture index in the complete component part or in sections of the component part. A representative sample can be taken of the complete component part if the complete component part is textured in the same manner, or of sections of the component part if only selected sections of the component part are textured in the same manner.

If the aspect ratio of the continuous strand is more than 2, the height of the continuous strand may be 500 $\mu$m or less. More specifically, the height of the continuous strand may be at most 200 $\mu$m, or at most 100 $\mu$m. The height of the continuous strand may also be at most 50 $\mu$m, or even at most 20 $\mu$m. Thin strands of 500 $\mu$m or less and high aspect ratios of more than 2 of the continuous strand are unusual in known methods of fused filament fabrication, as the 3D printing process is slow with these printing parameters.

If the aspect ratio of the continuous strand is more than 2, the continuous strand is deposited with a filling ratio of at least 50%, or of at least 60%, or of at least 70%, or of at least 80%, or of at least 90%, or of at least 95%. A filling ratio of 90% or more or of 95% or more is not used in known methods of fused filament fabrication, as the printing process is slow in this case.

The filling ratio can be determined on polished cross sections of the 3D printed matrix material-boron nitride composite.

In some embodiments of the method and of the filamentary structure disclosed herein, the ratio of the width of the continuous strand to the height of the continuous strand is less than 1. The hexagonal boron nitride platelets have a basal plane, and the basal plane of the hexagonal boron nitride platelets is oriented perpendicularly to the substrate on which the filamentary structure is deposited. The orientation of the boron nitride platelets being perpendicular to the substrate and to each previous layer can be determined by measuring the texture index of the resulting 3D printed component part, on a sample with one major surface of the sample being arranged in a direction parallel to the substrate, and the one major surface of the sample being oriented parallelly to the surface of the sample holder of the XRD measurement.

As used herein, the orientation of the boron nitride platelets being perpendicular to the substrate means that the resulting 3D printed component parts have a low texture index of less than 1. More specifically, the texture index may be at most 0.9, or at most 0.8, or at most 0.5, or at most 0.2, or at most 0.1, or at most 0.05, or at most 0.01. The ratio of the width of the continuous strand to the height of the continuous strand, i.e. the aspect ratio of the continuous strand, of these embodiments is less than 1 and may be at most 0.9, or at most 0.7, or at most 0.5. The aspect ratio may also be at most 0.3 or at most 0.1. A low aspect ratio of the continuous strand of less than 1 will lead to high values of through-plane thermal conductivity, and the values of through-plane thermal conductivity will increase with decreasing aspect ratio of the continuous strand.

If the aspect ratio of the continuous strand is less than 1, the continuous strand is deposited with a filling ratio of at least 90%, or of at least 95%. The continuous strand may comprise deposited portions having close contact to one another, or overlapping each other. The overlap may be to an extent of 2 to 10%. The continuous strand may comprise deposited portions being oriented parallelly to one another. The continuous strand may consist of deposited portions being oriented parallelly to one another. The portions being oriented parallelly to one another may be deposited in the same direction of deposition.

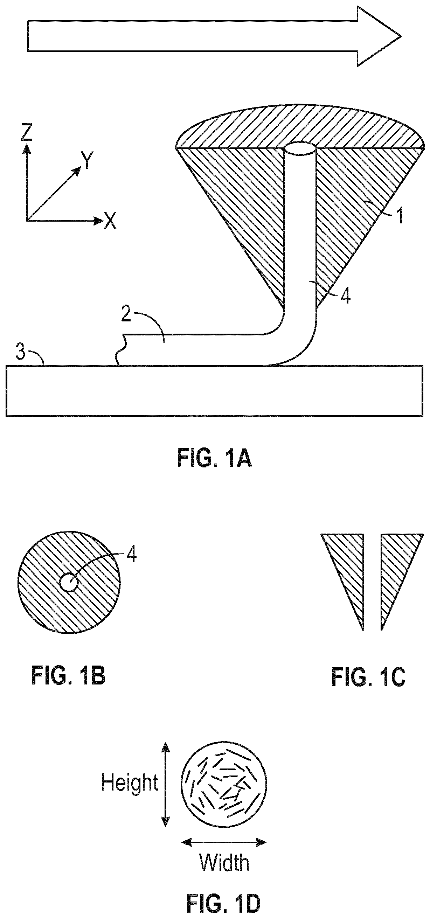

In the method for making a 3D printed component part disclosed herein, a continuous strand is extruded from a nozzle. The nozzle may be made from metal, for example from steel. The nozzle may also be made from a polymer material such as a thermoplastic material or a duroplastic material, and may be selected dependent on the $T_g$ temperature of the material to be extruded from the nozzle. The $T_g$ temperature of the nozzle needs to be well above the $T_g$ temperature of the material to be extruded from the nozzle. Useful thermoplastic materials for the nozzle may be polypropylene, polyethylene, polycarbonate and polyamide, useful duroplastic materials for the nozzle may be epoxy and acrylic materials and polyurethane. Metallic nozzles coated with polytetrafluoroethylene or nozzles made from polytetrafluoroethylene may also be used. Various types of nozzles and nozzle arrangements are shown in the Figures (Figures 1 A - 1 D, 2 A - 2 D, 3 A - 3 D, 4 A - 4D, 5 A - 5 D, 6 A - 6 D, 7 A - 7 D, 8 A - 8 D and 9 A - 9 D). The Figures show the lower part of the nozzle 1 of Figure 11, at the position where the molten filament leaves the heated liquefier 13.

Figures 1 A - 1 D show a standard nozzle with a standard deposition arrangement as used in known methods of 3D printing. The nozzle is round with a tapered tip at the outlet opening (see Figure 1B showing the nozzle in a cross-sectional view parallel to the substrate, and Figure 1C showing a vertical cross-sectional view of the nozzle). Figure 1 A shows the round nozzle 1 with the continuous strand 2 being deposited on the substrate 3. The arrow on top of Figure 1A shows the nozzle movement during 3D printing which is in "x" direction and may also be in "y" direction, or in any "(x, y)" direction, relative to the substrate. For the next layer, the nozzle is moved in the "z" direction and the next layer is printed. The nozzle opening 4 has a circular shape. The distance of the nozzle tip to the substrate is at least the diameter of the nozzle opening 4. Figure 1D shows a cross-sectional view of the deposited continuous strand. The ratio of the width of the continuous strand to the height of the continuous strand, i.e. the aspect ratio of the continuous strand, is from 1 to 2. The boron nitride platelets are oriented parallelly to the walls of the continuous strand, resulting in a substantially isotropic orientation in the continuous strand.

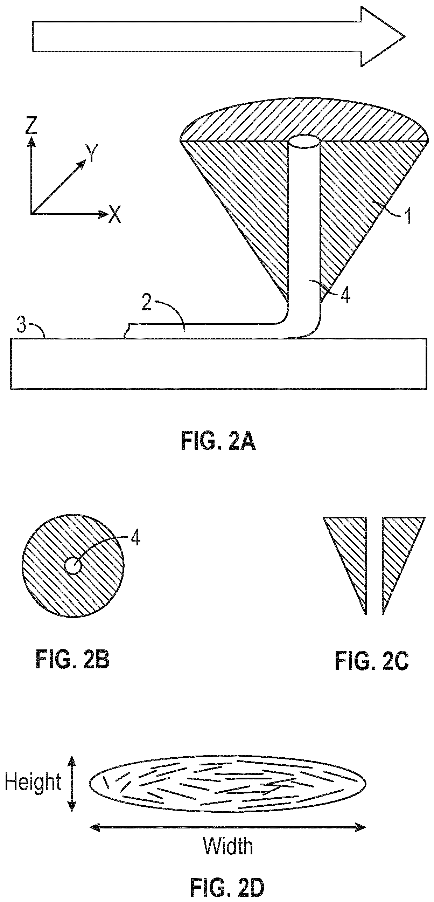

Figures 2 A - 2 D show a round nozzle with a flat deposition arrangement. The nozzle is round with a tapered tip at the outlet opening (see Figure 2B showing the nozzle in a cross-sectional view parallel to the substrate, and Figure 2C showing a vertical cross-sectional view of the nozzle). Figure 2A shows the round nozzle 1 with the continuous strand 2 being deposited on the substrate 3. The arrow on top of Figure 2A shows the nozzle movement during 3D printing which is in "x" direction and may also be in "y" direction, or in any "(x, y)" direction, relative to the substrate. For the next layer, the nozzle is moved in the "z" direction and the next layer is printed. The nozzle opening 4 has a circular shape. The deposition arrangement is a flat deposition which is not known from standard methods of 3D printing. The flat deposition is a result of the low distance from nozzle tip to substrate which is lower than the diameter of the nozzle opening and lower than in the situation of Figure 1A. Figure 2D shows a cross-sectional view of the deposited continuous strand. The ratio of the width of the continuous strand to the height of the continuous strand, i.e. the aspect ratio of the continuous strand, is more than 2 and about 10 in the example of Figure 2D. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

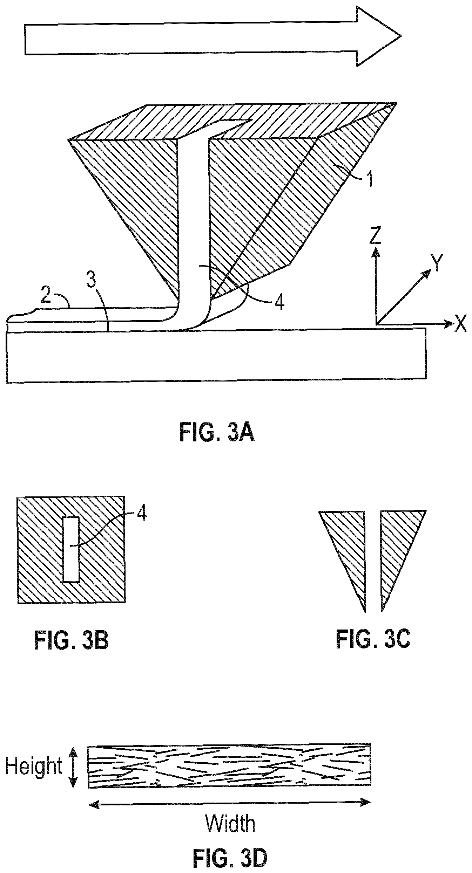

Figures 3 A - 3 D show a rectangular nozzle. A rectangular nozzle is not known from standard 3D printing methods. The nozzle has a rectangular cross-section and is tapered at the outlet opening (see Figure 3B showing the nozzle in a cross-sectional view parallel to the substrate, and Figure 3C showing a vertical cross-sectional view of the nozzle). Figure 3A shows the rectangular nozzle 1 with the continuous strand 2 being deposited on the substrate 3. The arrow on top of Figure 3A shows the nozzle movement during 3D printing which is in "x" direction relative to the substrate for printing one layer. 3D printing in the "y" direction, and in any "(x, y)" direction, is also possible by rotating the nozzle to the desired direction. For the next layer, the nozzle is moved in the "z" direction and the next layer is printed. The nozzle opening 4 has a rectangular shape. The distance of the nozzle tip to the substrate is at least the width of the nozzle opening 4 in the direction of the nozzle movement. Figure 3D shows a cross-sectional view of the deposited continuous strand. The ratio of the width of the continuous strand to the height of the continuous strand, i.e. the aspect ratio of the continuous strand, is more than 2 and about 6 in the example of Figure 3B. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

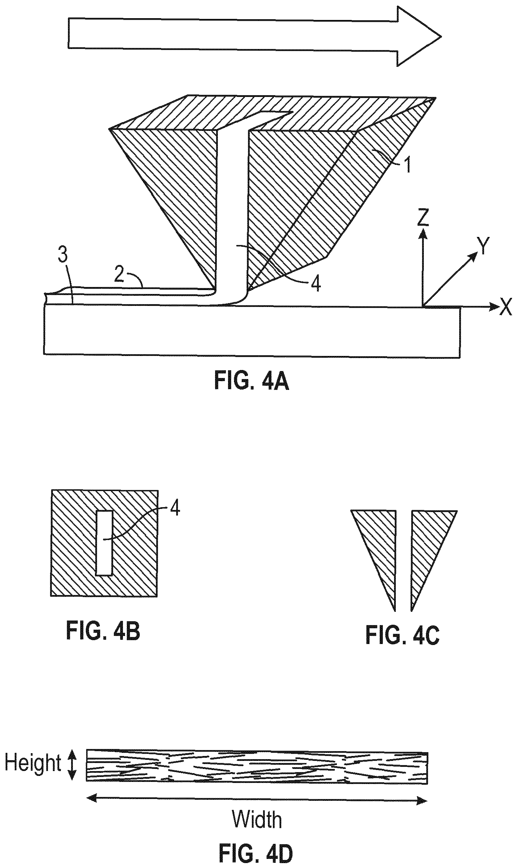

Figures 4 A - 4 D show the rectangular nozzle of Figures 4 A - 4 C. The nozzle has a rectangular cross-section and is tapered at the outlet opening (see Figure 4B showing the nozzle in a cross-sectional view parallel to the substrate, and Figure 4C showing a vertical cross-sectional view of the nozzle). Figure 4A shows the rectangular nozzle 1 with the continuous strand 2 being deposited on the substrate 3. The arrow on top of Figure 4A shows the nozzle movement during 3D printing which is in "x" direction relative to the substrate for printing one layer. 3D printing in the "y" direction, and in any "(x, y)" direction, is also possible by rotating the nozzle to the desired direction. For the next layer, the nozzle is moved in the "z" direction and the next layer is printed. The nozzle opening 4 has a rectangular shape. The deposition arrangement is a flat deposition which is not known from standard methods of 3D printing. The flat deposition is a result of the low distance from nozzle tip to substrate. The distance of the nozzle tip to the substrate is lower than the width of the nozzle opening 4 in the direction of the nozzle movement, and lower than in the situation of Figure 3A. Figure 4D shows a cross-sectional view of the deposited continuous strand. The ratio of the width of the continuous strand to the height of the continuous strand, i.e. the aspect ratio of the continuous strand, is more than 2 and larger than in the example of Figures 3A and 3D, and is about 20 in the example of Figure 4B. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

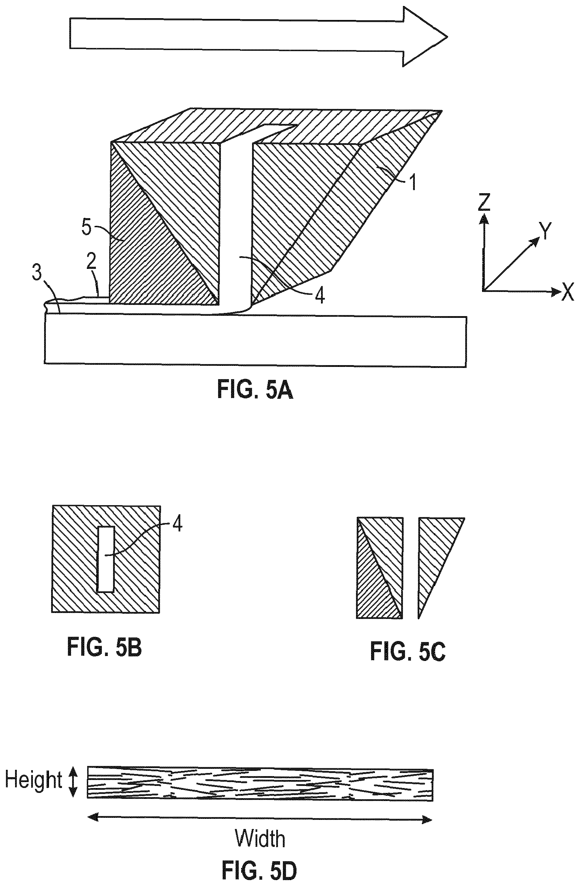

Figures 5 A - 5 D show a rectangular nozzle. The nozzle has a rectangular cross-section and is tapered at the outlet opening in the direction of the nozzle movement, and has a wiper 5 with a flat surface parallel to the substrate (see Figure 5B showing the nozzle in a cross-sectional view parallel to the substrate, and Figure 5C showing a vertical cross-sectional view of the nozzle). The rectangular nozzle of Figures 5 A - 5 D may be used advantageously for flat substrates. Figure 5A shows the rectangular nozzle 1 with the continuous strand 2 being deposited on the substrate 3. The arrow on top of Figure 5 A shows the nozzle movement during 3D printing which is in "x" direction relative to the substrate for printing one layer. 3D printing in the "y" direction, and in any "(x, y)" direction, is also possible by rotating the nozzle to the desired direction. For the next layer, the nozzle is moved in the "z" direction and the next layer is printed. The nozzle opening 4 has a rectangular shape. The deposition arrangement is a flat deposition which is not known from standard methods of 3D printing. The flat deposition is a result of the low distance from nozzle tip to substrate. The distance of the nozzle tip to the substrate is lower than the width of the nozzle opening 4 in the direction of the nozzle movement. The shear of the boron nitride platelets during deposition of the continuous strand may be increased by using the nozzle of Figure 5A. Figure 5D shows a cross-sectional view of the deposited continuous strand. The ratio of the width of the continuous strand to the height of the continuous strand, i.e. the aspect ratio of the continuous strand, is more than 2 and larger than in the example of Figures 3A and 3D, and is about 20 in the example of Figure 5B. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

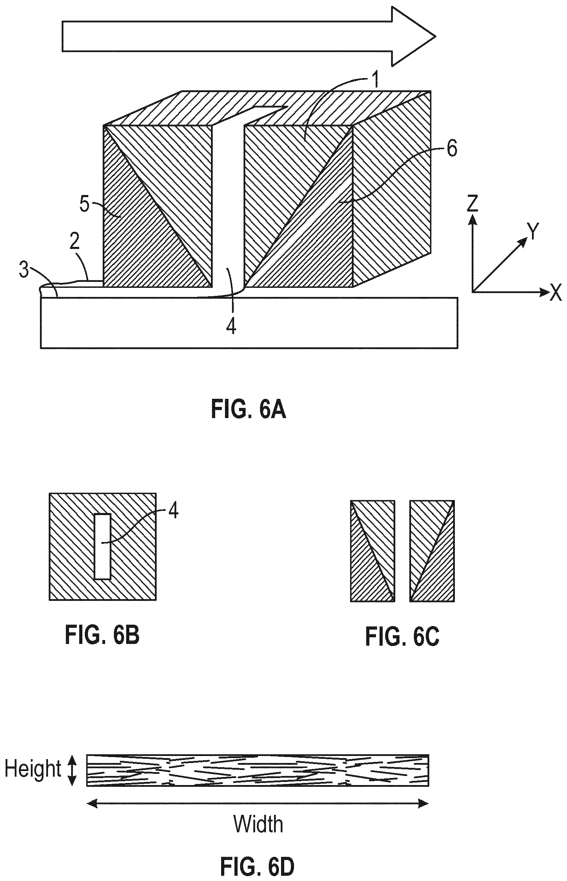

Figures 6 A - 6 D show a rectangular nozzle. The nozzle has a rectangular cross-section and has wipers 5, 6 with a flat surface parallel to the substrate in the direction of the nozzle movement and at an opposite side of the nozzle (see Figure 6B showing the nozzle in a cross-sectional view parallel to the substrate, and Figure 6C showing a vertical cross-sectional view of the nozzle). The rectangular nozzle of Figures 6 A - 6 C may be used advantageously for flat substrates and for printing continuous strands with a high aspect ratio. Figure 6A shows the rectangular nozzle 1 with the continuous strand 2 being deposited on the substrate 3. The arrow on top of Figure 6A shows the nozzle movement during 3D printing which is in "x" direction relative to the substrate for printing one layer. 3D printing in the "y" direction, and in any "(x, y)" direction, is also possible by rotating the nozzle to the desired direction. For the next layer, the nozzle is moved in the "z" direction and the next layer is printed. The nozzle opening 4 has a rectangular shape. The deposition arrangement is a flat deposition which is not known from standard methods of 3D printing. The flat deposition is a result of the low distance from nozzle tip to substrate. The distance of the lower nozzle surface at the outlet opening to the substrate is lower than the width of the nozzle opening 4 in the direction of the nozzle movement. The shear of the boron nitride platelets during deposition of the continuous strand may be further increased by using the nozzle of Figure 6A. Figure 6D shows a cross-sectional view of the deposited continuous strand. The ratio of the width of the continuous strand to the height of the continuous strand, i.e. the aspect ratio of the continuous strand, is more than 2 and larger than in the example of Figures 3A and 3D, and is about 20 in the example of Figure 6B. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

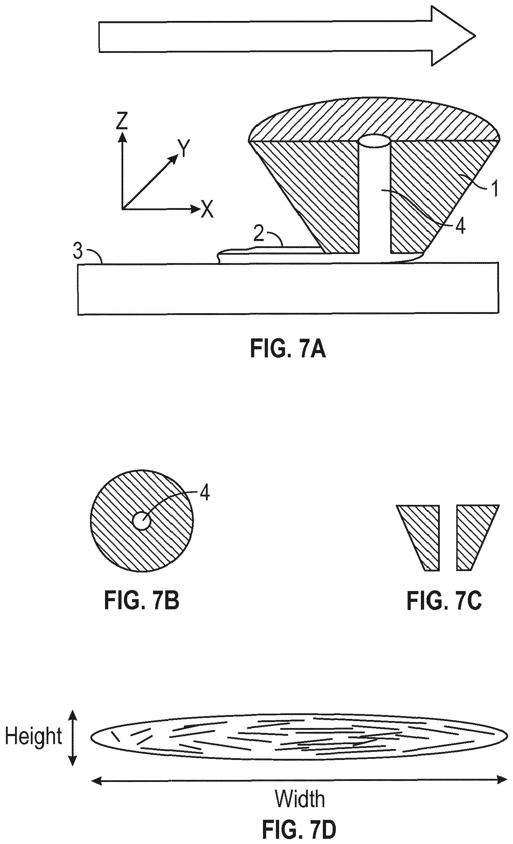

Figures 7 A - 7 D shows another example of a round nozzle. The round nozzle is tapered towards the outlet opening, with a flat area at the outlet opening (see Figure 7B showing the nozzle in a cross-sectional view parallel to the substrate, and Figure 7C showing a vertical cross-sectional view of the nozzle). The round nozzle of Figures 7 A - 7 C may be used advantageously for flat substrates and for printing continuous strands with a high aspect ratio. Figure 7A shows the round nozzle 1 with the continuous strand 2 being deposited on the substrate 3. The arrow on top of Figure 7A shows the nozzle movement during 3D printing which is in "x" direction and may also be in "y" direction, and in any "(x, y)" direction, relative to the substrate. For the next layer, the nozzle is moved in the "z" direction and the next layer is printed. The nozzle opening 4 has a circular shape. The deposition arrangement is a flat deposition which is not known from standard methods of 3D printing. The flat deposition is a result of the low distance from nozzle tip to substrate. The distance of the lower nozzle surface at the outlet opening to the substrate is lower than the width of the nozzle opening 4 in the direction of the nozzle movement. The shear of the boron nitride platelets during deposition of the continuous strand may be increased by using the nozzle of Figure 7A. Figure 7D shows a cross-sectional view of the deposited continuous strand. The ratio of the width of the continuous strand to the height of the continuous strand, i.e. the aspect ratio of the continuous strand, is more than 2 and is about 20 in the example of Figure 7B. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

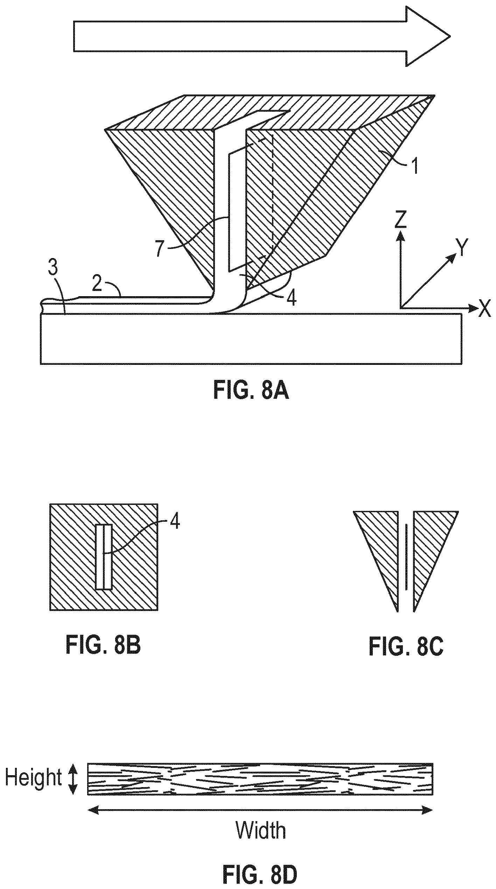

Figures 8 A - 8 D shows another example of a rectangular nozzle. The nozzle has a rectangular cross-section and is tapered at the outlet opening (see Figure 8B showing the nozzle in a cross-sectional view parallel to the substrate, and Figure 8C showing a vertical cross-sectional view of the nozzle). The rectangular nozzle of Figures 8 A - 8 C has an insert 7 which splits and recombines the molten 3D printable filament which is transported through the nozzle. The rectangular nozzle of Figures 8 A - 8 C may be used advantageously for printing continuous strands with a high aspect ratio and with the boron nitride platelets being oriented parallelly to the substrate. Figure 8A shows the rectangular nozzle 1 with the continuous strand 2 being deposited on the substrate 3. The arrow on top of Figure 8A shows the nozzle movement during 3D printing which is in "x" direction relative to the substrate for printing one layer. 3D printing in the "y" direction, and in any "(x, y)" direction, is also possible by rotating the nozzle to the desired direction. For the next layer, the nozzle is moved in the "z" direction and the next layer is printed. The nozzle opening 4 has a rectangular shape. The deposition arrangement is a flat deposition which is not known from standard methods of 3D printing. The flat deposition is a result of the low distance from nozzle tip to substrate. The distance of the nozzle tip at the outlet opening to the substrate is lower than the width of the nozzle opening 4 in the direction of the nozzle movement. The shear of the boron nitride platelets during deposition of the continuous strand may be increased by using the nozzle of Figure 8A. Figure 8D shows a cross-sectional view of the deposited continuous strand. The ratio of the width of the continuous strand to the height of the continuous strand, i.e. the aspect ratio of the continuous strand, is more than 2 and is about 20 in the example of Figure 8B. The boron nitride platelets are oriented parallelly to the walls of the continuous strand and parallelly to the substrate. With this nozzle and a flat deposition, 3D printed component parts can be made having a high texture index of at least 8 and having a high in-plane thermal conductivity.

Figures 9 A - 9 D shows another example of a rectangular nozzle. The nozzle has a rectangular cross-section and is tapered at the outlet opening (see Figure 9B showing the nozzle in a cross-sectional view parallel to the substrate, and Figure 9C showing a vertical cross-sectional view of the nozzle). The outlet opening of the rectangular nozzle of Figures 9 A - 9 C is at one of the tapered sides and at the bottom of the nozzle. The rectangular nozzle of Figures 9 A - 9 C may be used advantageously for printing continuous strands with a low aspect ratio and with the boron nitride platelets being oriented perpendicularly to the substrate. Figure 9A shows the rectangular nozzle 1 with the continuous strand 2 being deposited in parallel portions on the substrate 3. The arrow on top of Figure 9A shows the nozzle movement during 3D printing of one layer which is in "y" direction relative to the substrate for printing one portion of the continuous strand and in "x" direction relative to the substrate for moving the nozzle to print the next portion of the continuous strand in the "y" direction. For the next layer, the nozzle is moved in the "z" direction and the next layer is printed. The nozzle opening 4 has a square shape. Figure 9D shows a cross-sectional view of one of the parallel portions of the deposited continuous strand. The ratio of the width of the continuous strand to the height of the continuous strand, i.e. the aspect ratio of the continuous strand, is less than 1 and is about 0.5 in the example of Figure 9B. The boron nitride platelets are oriented parallelly to the walls of the continuous strand and perpendicularly to the substrate. With this nozzle and this kind of deposition, 3D printed component parts can be made having a low texture index of less than 1 and having a high through-plane thermal conductivity.

The filamentary structure obtained by extruding the molten filament from a nozzle to form a continuous strand and depositing the continuous strand on a substrate, is cooled to form a 3D printed component part. The 3D printed component part comprises the thermoplastically workable material and filler particles which comprise hexagonal boron nitride particles comprising hexagonal boron nitride platelets dispersed therein. The hexagonal boron nitride platelets have a predetermined orientation in the cooled thermoplastically workable material. The molten filament may be cooled at ambient temperature. If the cooling of the molten filament is too rapid due to the high thermal conductivity of the composite material comprising hexagonal boron nitride platelets, the build environment of the FFF 3D printer may be heated.

The 3D printed component part disclosed herein may be used as thermal conduction means to control the temperature of electrical and electronic components or assemblies or batteries.

The present disclosure will be described in more detail by the following examples.

Examples

Prophetic Example

In one embodiment, a thermoplastic elastomer (TPE), such as Evoprene 3751 Blue 5258 (available from Mexichem, Evoprene, Leominster, MA 01453, USA), is added in a twin-screw extruder (such as Leistritz ZSE 18 MAXX, Nuremburg, Germany) as a granulate in a gravimetric main feeding and boron nitride platelets are added in a gravimetric side feeding. The screw speed is set to 300 rpm and a throughput of 4 kg/h is run, wherein 1.2 kg/h TPE is dosed in the main feeding and 2.8 kg/h boron nitride is dosed in the side feeding. The boron nitride platelets have a medium grain size ($d_{50}$) of 13 $\mu$m measured by laser diffraction (Mastersizer 2000, wet measurement) and a specific surface area (BET) of 8.3 $m^2$/g, a content of water-soluble boron compounds of < 0.1 wt.-% and a mean aspect ratio of the boron nitride platelets of 31. The twin-screw extruder is run at 220 °C. The obtained compound is channeled through two 1.75 mm nozzles, cooled down and two coils are spooled. The proportion of boron nitride in the obtained polymer composition in the form of filaments is 50% by volume and 70% by weight.

For 3D printing, the printer Delta Wasp 2040 (CSP s.r.l., Massa Lombarda, Italy) and the software program Cura 3.1.0 (Ultimaker B.V., Geldermalsen, The Netherlands) are used. The sample or component part to be printed has the dimensions 40 x 40 x 2,2 mm$^3$. The 3D printer is set to operate in the fused deposition modelling mode (FFF mode). The preparation of printing is performed according to manufacturer's instructions.

The boron nitride filled TPE in the form of filaments can be extruded through a nozzle and deposited on the printing plate of the 3D printer using a round nozzle and a flat deposition as shown in Figure 2A. The inner diameter of the steel nozzle is 700 μm. A continuous strand can be deposited on the printing plate. The printing plate is heated up to 80°C. The predetermined pattern of the continuous strand is shown in Figure 10A. After each layer, the printing process is interrupted for 10 seconds to clean the nozzle with a cloth. 45 layers are printed with the predetermined pattern of Figure 10A. The filling ratio (Cura: infill density) is set to 99%. The individual portions of the continuous strand are oriented parallelly to one another and are in close contact to each other. The substrate is completely covered with the continuous strand, i.e. with the individual portions of the continuous strand. The distance of the nozzle to the printing plate is adjusted so that the height of the continuous strand is in the range of 25 to 40 μm and the aspect ratio of the continuous strand is in the range of 15 - 30.

Two smaller samples with the dimensions 12 x 10 x 2 mm$^3$ are cut out of the printed sample, in a direction parallel to the substrate.

From one of the two samples with the dimensions 12 x 10 x 2 mm$^3$, 5 stripes with the dimensions 10 x 2 x 2 mm$^3$ are cut out of the sample. Each stripe is turned individually by 90° over its long axis, and the 5 stripes are then stacked to obtain a 10 x 10 x 2 mm$^3$ sample which is used for the measurement of the in-plane thermal conductivity.

On the other one of the two samples with the dimensions 12 x 10 x 2 mm$^3$, the through-plane thermal conductivity is measured. On this sample, also the texture index (TI) is measured, with one major surface of the sample of dimensions 12 x 10 mm$^3$ being oriented parallelly to the surface of the sample holder of the XRD measurement. The texture index is measured as described above. The texture index measured on this sample corresponds to the texture index of the 3D printed component part with the dimensions 40 x 40 x 2.2 mm$^3$. The texture index is in the range of 200 - 300.

For measuring thermal conductivity, the laser-flash method is used and carried out with the Nanoflash LFA 447 (Netzsch, Selb, Germany) according to ISO 22007-4:2017. Measurements are taken at 25 °C. Thermal conductivity (TC) is determined by measuring the values for thermal diffusivity a and density D, and calculating the specific heat capacity $c_p$ from the specific heat capacity of the TPE and the specific heat capacity of boron nitride, and is calculated from these values according to the equation TC = a *$c_p$ * D. The specific heat capacity $c_p$ of the TPE is 1.61 J / (g * K), and the specific heat capacity $c_p$ of boron nitride is 0.80 J / (g * K). The thermal diffusivity a is measured with the Nanoflash LFA 447 (Netzsch, Selb, Germany) on the samples that are produced as described above, having the dimensions 10 x 10 x 2 mm$^3$. The standard Pyroceram 9606 is used for calibration of the measurement.

The in-plane thermal conductivity is in the range of 9 - 13 W/m*K, the through-plane thermal conductivity is in the range of 1 - 2 W/m*K.

Width and height of the continuous strand are measured with an optical microscope. The height of the continuous strand corresponds to the height of a single layer.

Density is measured on the 3D printed 40 x 40 x 2.2 mm$^3$ sample by the Archimedes method. The theoretical density of the TPE-boron nitride composite is 1.60 g/cm$^3$. The relative density is in the range of 75 - 90%.

Prophetic Comparative Example

For the Comparative Example, all steps are repeated according to the Example, with the exceptions that only one layer was printed and the distance of the nozzle to the substrate was increased to have the standard deposition as shown in Figures 1 A - 1 D.

The aspect ratio of the resulting continuous strand is in the range of 1.5 - 1.9.

The texture index is in the range of 4 - 6.

**Claims**

1. A filamentary structure manufactured during 3D printing by fused filament fabrication, the filamentary structure comprising a continuous strand comprising a thermoplastic workable material and filler particles, wherein the filler particles comprise hexagonal boron nitride particles comprising hexagonal boron nitride platelets, and wherein the ratio of the width of the continuous strand to the height of the continuous strand is either more than 2 or less than 1.

2. The filamentary structure of claim 1, wherein the boron nitride platelets have a mean aspect ratio of more than 7.

3. The filamentary structure of claim 1 or 2, wherein the mean particle size ($d_{50}$) of the boron nitride platelets is from 5 to 100 $\mu$m.

4. The filamentary structure of any of claims 1 to 3, wherein the thermoplastically workable material is selected from the group consisting of thermoplastic materials, thermoplastically workable duroplastic materials, and mixtures thereof.

5. The filamentary structure of any of claims 1 to 4, wherein at least one part of the continuous strand comprises portions being oriented parallel to one another.

6. A 3D printable filament for manufacturing the filamentary structure of any of claims 1 to 5 during 3D printing, wherein the filament comprises a thermoplastically workable material and filler particles, wherein the filler particles comprise hexagonal boron nitride particles comprising hexagonal boron nitride platelets.

7. A 3D printed component part comprising at least one portion formed from the filamentary structure of any one of claims 1 to 5.

8. The component part of claim 7, wherein the at least one portion of the component part formed from the filamentary structure of any one of claims 1 to 5 has a texture index of at least 8, and wherein the ratio of the width of the continuous strand to the height of the continuous strand is more than 2.

9. The component part of claim 7, wherein the at least one portion of the component part formed from the filamentary structure of any one of claims 1 to 5 has a texture index of less than 1, and wherein the ratio of the width of the continuous strand to the height of the continuous strand in the filamentary structure is less than 1.

10. The component part according to any one of claims 7 to 9, wherein the at least one portion of the component part has a relative density of at least 60% of the theoretical density of the filamentary structure.

11. A 3D printing method for making the 3D printed component part of any one of claims 7 to 10, the method comprising

providing a 3D printable filament, the 3D printable filament comprising a thermoplastically workable material and filler particles, wherein the filler particles comprise hexagonal boron nitride particles comprising hexagonal boron nitride platelets,
melting the 3D printable filament,
extruding the molten filament from a nozzle to form a continuous strand and depositing the continuous strand on a substrate in a predetermined pattern layer by layer to form a filamentary structure, and
cooling the filamentary structure to form a 3D printed component part comprising the thermoplastically workable material and filler particles dispersed therein, wherein the filler particles comprise hexagonal boron nitride particles comprising hexagonal boron nitride platelets, the hexagonal boron nitride platelets having a predetermined orientation in the cooled thermoplastically workable material.

12. The method of claim 11, wherein the ratio of the width of the continuous strand to the height of the continuous strand is more than 2, and wherein the hexagonal boron nitride platelets have a basal plane, and wherein the basal plane of the hexagonal boron nitride platelets is oriented parallel to the substrate.

13. The method of claim 11, wherein the ratio of the width of the continuous strand to the height of the continuous strand is less than 1, and wherein the hexagonal boron nitride platelets have a basal plane, and wherein the basal plane of the hexagonal boron nitride platelets is oriented perpendicular to the substrate.

14. The method of any of claims 11 to 13, wherein at least one part of the continuous strand is deposited in portions being oriented parallel to one another.

15. Use of the component part of any of claims 9 to 12 as thermal conduction means to control the temperature of electrical and electronic components or assemblies or batteries.

**FIG. 1A**

**FIG. 1B**

**FIG. 1C**

**FIG. 1D**

FIG. 2A

FIG. 2B

FIG. 2C

FIG. 2D

FIG. 3A

FIG. 3B

FIG. 3C

FIG. 3D

FIG. 4A

FIG. 4B

FIG. 4C

FIG. 4D

FIG. 5A

FIG. 5B

FIG. 5C

FIG. 5D

**FIG. 6A**

**FIG. 6B**

**FIG. 6C**

Height

Width

**FIG. 6D**

FIG. 7A

FIG. 7B

FIG. 7C

FIG. 7D

FIG. 8A

FIG. 8B

FIG. 8C

Height

Width

FIG. 8D

**FIG. 9A**

**FIG. 9B**

**FIG. 9C**

Height

Width

**FIG. 9D**

FIG. 10A

FIG. 10B

FIG. 10C

FIG. 10D

FIG. 10E

FIG. 11

Europäisches
Patentamt

European
Patent Office

Office européen
des brevets

# EUROPEAN SEARCH REPORT

Application Number

EP 18 19 1399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 242 908 A1 (PHILIPS LIGHTING HOLDING BV [NL]) 15 November 2017 (2017-11-15) * paragraphs [0005], [0033], [0034]; claim 1; figure 1; table 1 * ----- | 1-15 | INV. B33Y70/00 B29C64/106 B33Y10/00 B33Y80/00 |
| A | JP 2017 213813 A (RICOH CO LTD) 7 December 2017 (2017-12-07) * paragraphs [0022], [0023], [0037]; figures 2-4 * ----- | 1-15 | B28B1/00 C08K3/38 D01F1/10 B29C70/62 |
| A | US 2016/263791 A1 (UIBEL KRISHNA B [DE] ET AL) 15 September 2016 (2016-09-15) * paragraphs [0055], [0056]; claim 1; figures 4,5 * ----- | 1-15 | |

TECHNICAL FIELDS
SEARCHED (IPC)

B33Y
B29C
B28B
C08K
D01F

The present search report has been drawn up for all claims

| Place of search | Date of completion of the search | Examiner |
|---|---|---|
| The Hague | 20 February 2019 | Martins Lopes, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 1399

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2019

| Patent document cited in search report | | Publication date | Patent family member(s) | Publication date |
|---|---|---|---|---|
| EP 3242908 | A1 | 15-11-2017 | CN 107257818 A<br>EP 3242908 A1<br>US 2018244890 A1<br>WO 2016134984 A1 | 17-10-2017<br>15-11-2017<br>30-08-2018<br>01-09-2016 |
| JP 2017213813 | A | 07-12-2017 | NONE | |
| US 2016263791 | A1 | 15-09-2016 | CN 106061703 A<br>EP 2860008 A1<br>EP 3254821 A2<br>JP 2016533282 A<br>KR 20160072138 A<br>US 2016263791 A1<br>WO 2015055552 A1 | 26-10-2016<br>15-04-2015<br>13-12-2017<br>27-10-2016<br>22-06-2016<br>15-09-2016<br>23-04-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016198425 A1
- WO 2016134984 A1